(19)

**Europäisches Patentamt**
**European Patent Office**
**Office européen des brevets**

(11) **EP 1 753 259 B1**

(12) **EUROPEAN PATENT SPECIFICATION**

(45) Date of publication and mention
of the grant of the patent:
**04.03.2009  Bulletin 2009/10**

(51) Int Cl.:
**H04W 36/18** *(2009.01)*

(21) Application number: **06016042.1**

(22) Date of filing: **01.08.2006**

(54) **Method for triggering handover of mobile terminal and mobile terminal thereof**

Verfahren zum Auslösen des Weiterreichens eines mobilen Endgeräts und entsprechendes mobiles Endgerät

Procédé pour déclencher le changement de cellule d'un terminal mobile et terminal mobile correspondant

(84) Designated Contracting States:
**AT BE BG CH CY CZ DE DK EE ES FI FR GB GR HU IE IS IT LI LT LU LV MC NL PL PT RO SE SI SK TR**

(30) Priority: **09.08.2005  KR 20050072921**

(43) Date of publication of application:
**14.02.2007  Bulletin 2007/07**

(73) Proprietor: **LG Electronics Inc.**
**Yongdungpo-gu**
**Seoul (KR)**

(72) Inventor: **Um, Koo-Hyun**
**Guro-Gu**
**Seoul (KR)**

(74) Representative: **Urner, Peter**
**Patentanwälte**
**TER MEER-MÜLLER-STEINMEISTER & PARTNER**
**Mauerkircherstrasse 45**
**D-81679 München (DE)**

(56) References cited:
**US-A- 5 613 205**          **US-A- 6 137 783**
**US-A1- 2004 116 133**     **US-A1- 2005 014 515**

• **FRECH E A ET AL: "Cellular models and hand-off criteria" IEEE, 1 May 1989 (1989-05-01), pages 128-135, XP010086243**

**Description**

BACKGROUND OF THE INVENTION

1. Field of the Invention

The present invention relates to a mobile terminal and, more particularly, to a method for triggering handover of a mobile terminal and its system.

2. Description of the Related Art

A mobile terminal, which employs a universal mobile telecommunications system (UMTS) and a wideband code division multiple access (WCDMA) technique, performs handover when signal strength weakens. Herein, handover refers to a function of, when the mobile terminal in a call communication state moves out of a pertinent base station service area (cell boundary) and moves into a neighbor base station service area, keeping the call state by being automatically tuned with a new traffic channel of the neighbor base station. That is, the mobile terminal wirelessly linked to the serving base station is wirelessly linked to a neighbor base station when signal strength of the serving base station becomes weak.

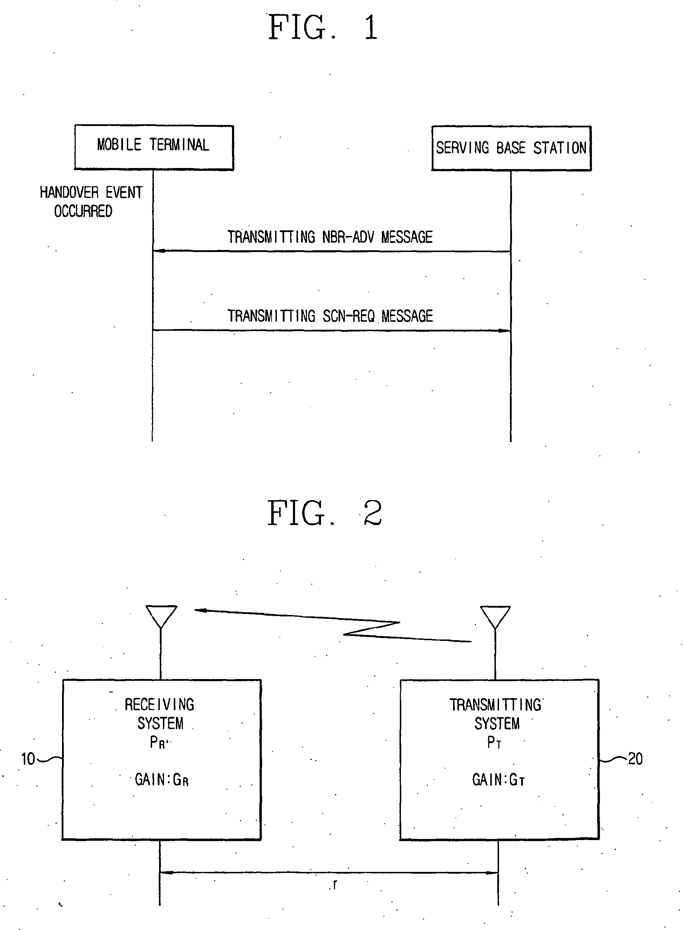

FIG. 1 shows a method for performing handover of a mobile terminal in accordance with the related art.

As shown in FIG. 1, when signal strength of the serving base station becomes weak so a handover event occurs, the mobile terminal receives a message for handover from the serving base station. For example, when the handover event occurs as the mobile terminal in a call communication state moves out of a cell boundary of a first base station and moves into a service boundary of a second base station, the serving base station transmits a NBR-ADV (neighbor advertisement) message including information regarding a plurality of neighbor base stations to the mobile terminal.

Then, the mobile terminal transmits a SCN-REQ (scanning interval request) message based on the NBR-ADV message to the serving base station to thereby determine a handover available base station.

However, in the related art method for triggering handover of the mobile terminal, the serving base station informs the mobile terminal about the plurality of neighbor base stations one-sidedly. Specifically, the serving base station transmits information regarding the plurality of neighbor base stations to the mobile terminal through the NBR-ADV message, and the mobile terminal determines a handover available base station by transmitting the SCN-REQ message to the serving base station. Namely, since the mobile terminal receives information of the plurality of neighbor base stations from the serving base station, time for scanning the information on the plurality of neighbor base stations for handover is lengthened.

Thus, the related art method for triggering handover of the mobile terminal has a problem that since time for scanning the information of the plurality of neighbor base stations is lengthened, handover cannot be quickly performed.

U.S. Patent Nos. 6,615,044, 6,845,238 and 6,879,831 also disclose related art handover methods.

US 6,137,783 describes a handover situation, wherein the handover is performed based on the geographical distance to other base stations, wherein the shortest geographical distance to one of the other base stations is determined and then selected.

The article "Cellular Models and Hand-off Criteria", by E.A. Frech et al., IEEE 1989. pages 128 to 135 describes that a mobile station and a base station have to carry out some measurement of parameters, which are used for handover.

SUMMARY OF THE INVENTION

Therefore, an object of the present invention is to provide a method and apparatus for triggering handover of a mobile terminal capable of quickly performing handover by reducing time required for scanning information of neighbor base stations when a handover event of a mobile terminal occurs.

Another object of the present invention is to provide a mobile terminal and method for performing handover, which address the limitations and disadvantages associated with the related art.

The objects are solved by the features of the independent claims.

Additional advantages, objects, and features of the invention will be set forth in part in the description which follows and in part will become apparent to those having ordinary skill in the art upon examination of the following or may be learned from practice of the invention. The objects and advantages of the invention may be realized and attained as particularly pointed out in the appended claims.

BRIEF DESCRIPTION OF THE DRAWINGS

The invention will be described in detail with reference to the following drawings in which like reference numerals refer to like elements wherein:

FIG. 1 is a view showing a method for triggering handover of a mobile terminal in accordance with a related art;

FIG. 2 is a view showing a system for explaining a method for triggering handover of a mobile terminal in accordance with the present invention;

FIG. 3 is a schematic block diagram showing the construction of an apparatus for triggering handover of a mobile terminal in accordance with the present invention; and

FIG. 4 is a flow chart illustrating the processes of a method for triggering handover of a mobile terminal in accordance with the present invention.

DETAILED DESCRIPTION OF THE PREFERRED EMBODIMENTS

A method for quickly performing handover by reducing time required for scanning based on signal strength (power value) of neighbor base stations when a communication-handover event of a mobile terminal occurs in accordance with the present invention will now be described with reference to FIGs. 2 to 4. Herein, the mobile terminal can be applied for a universal mobile telecommunications system (UMTS) and a wideband code division multiple access (WCDMA) system.

FIG. 2 is a view showing a system for explaining a method for triggering handover of a mobile terminal in accordance with the present invention. The mobile terminal can be a cellular phone, a smart phone, etc.

As shown in FIG. 2, a mobile terminal 10 calculates a power value ($P_R$) received from a neighbor base station 20 through equation (1) shown below:

$$P_R = \left[ \frac{\lambda}{4\pi r} \right]^2 P_T \cdot G_T \cdot G_R \quad \text{------------} \quad (1)$$

wherein $P_T$ is transmission power of the neighbor station 20, $G_T$ is a transmitting antenna gain of the neighbor base station 20 and $G_R$ is a receiving antenna gain of the mobile terminal 10.

Accordingly, the mobile terminal 10 can calculate a distance (r) between the mobile terminal itself and the neighbor base station 20 through equation (2) shown below:

$$r = \frac{\lambda}{4\pi} \cdot \sqrt{\frac{P_T \cdot G_T \cdot G_R}{P_R}} \quad \text{------------} \quad (2)$$

The mobile terminal 10 receives signals from a plurality of adjacent base stations, but registers only information of those neighbor base stations corresponding to 'r' values smaller than a reference distance value (e.g., 1.5 km) in a message for handover (e.g., N_NEIGHBORS of MOB_NBR-ADV). Accordingly, the number of neighbor base stations to be scanned is limited according to each signal strength of the plurality of neighbor base stations or each distance value. As a result, the present invention reduces the time required for scanning the information of the neighbor base stations and thus quickly performs handover.

In the present invention, the mobile terminal calculates a distance between the mobile terminal itself and each of the neighbor base stations, e.g., using the equation (2) above, and registers only those neighbor base stations that are close to the mobile terminal by a pre-set number (e.g., information of a neighbor base station having the shortest distance value), to thereby quickly perform handover.

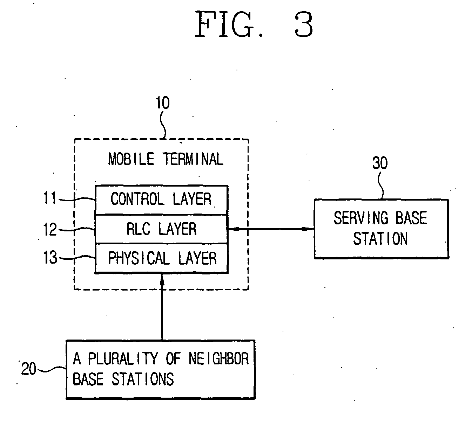

FIG. 3 is a schematic block diagram showing the construction of an apparatus for triggering handover of a mobile terminal in accordance with an embodiment of the present invention.

As shown in FIG. 3, the apparatus for triggering handover of a mobile terminal includes a physical layer 13 for receiving signals from a plurality of neighbor base station when a handover event occurs, and measuring power values of the received signals; a radio link control (RLC) layer 12 for transmitting a message for handover to a serving base station 30; and a control layer 11 for calculating a distance between the mobile terminal 10 and each of the neighbor base stations 20 based on the power values measured by the physical layer 13, and registering information of only the one or more neighbor base stations each having a value of distance shorter than a reference distance value among the calculated distance values, in the message for handover. Herein, the RLC layer 12 transmits the registered information of the selected neighbor base stations to the serving base station 30 through the message for handover. The mobile terminal 10 includes the layers 11-13 and other components.

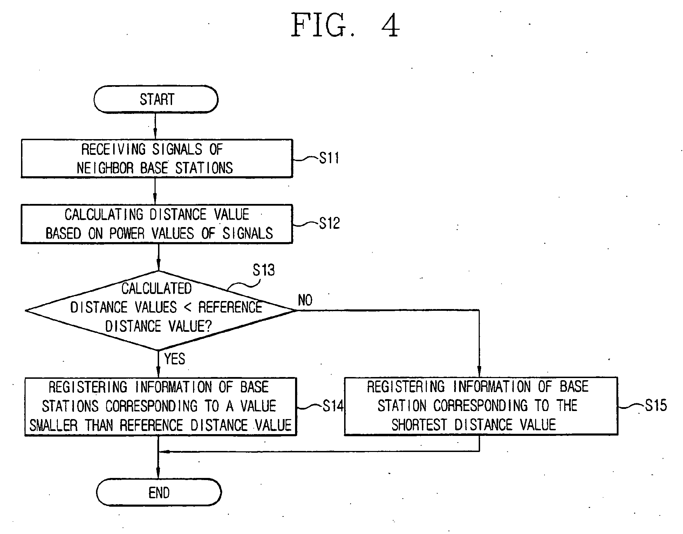

The operation of the apparatus for triggering handover of the mobile terminal in accordance with an embodiment of the present invention will now be described in detail with reference to FIG. 4.

FIG. 4 is a flow chart illustrating the processes of a method for triggering handover of a mobile terminal in accordance with the present invention. Herein, the handover refers to soft handover.

As shown in FIG. 4, the method for triggering handover of a mobile terminal in accordance with an embodiment of the present invention includes receiving, by the mobile terminal, signals from a plurality of neighbor base stations when a handover event occurs based on each signal strength between the mobile terminal and base stations; measuring a power value of each received signal and calculating a distance between the mobile terminal and each neighbor base station based on each measured power value; comparing each of the calculated distance values with a reference distance value and registering information of neighbor base stations corresponding to values of distances shorter than the reference distance value among the calculated distance values in a message for handover (e.g., an SCN-REQ (Scanning Interval Allocation Request) message); and determining a base station to which the mobile terminal can perform handover by transmitting the message for handover to a serving base station.

Herein, it is preferred that the number of neighbor base stations having the values of shorter distances is previously set.

The method for triggering handover of a mobile terminal in accordance with the present invention will now be described with reference to FIGs. 3 and 4.

First, when a handover event occurs as signal strength between the mobile terminal 10 and the serving base station 30 becomes weak, the physical layer 13 of the mobile terminal receives signals from the plurality of neighbor base stations 20, measures power of each received signal, and transmits the measured power values to the control layer 11. For example, when the handover event occurs as the mobile terminal 10 in a call state moves out of a service area (cell boundary) of a first base station and moves into a service area of a second base station, the physical layer 13 receives a signal of the second base station and measures power of the received signal (step S11).

Herein, the second base station is at least one or more base stations, and handover refers to a function in which when the mobile terminal in a call communication state moves out of a pertinent base station service area (cell boundary) into a neighbor base station service area, and signal strength between the pertinent base station and the mobile terminal becomes weak, so in order to maintain the call, the mobile terminal is automatically tuned with a new traffic channel of the neighbor base station. Namely, the mobile terminal is wirelessly linked with a neighbor base station in order to maintain the communication link.

Thereafter, the control layer 11 of the mobile terminal 10 receives power values of the plurality of neighbor base stations, calculates a distance value between the mobile terminal 10 itself and each neighbor base station by substituting the received power values to the above-stated equation (2), and determines whether each calculated distance value is smaller than a pre-set reference distance value (steps S12 & S13).

If one or more of the calculated distance values are determined to be smaller than the pre-set reference distance value (step S13), the control layer 11 of the mobile terminal 10 registers information of neighbor base stations each having a value of a distance shorter than the pre-set reference distance value in a message for handover (step S14). Herein, according to one preferred embodiment the mobile terminal 10 registers only information of a neighbor base station having the shortest distance value among the calculated distance values that are less than the pre-set reference distance value, in the message for handover.

If, however, the calculated distance values are greater than (or equal to) the pre-set reference distance value at step S13, it is preferred that the control layer 11 of the mobile terminal 10 registers information of a neighbor base station having the shortest calculated distance value among all the calculated distance values, in a message for handover (step S15).

The mobile terminal 10 determines a handover available base station (e.g., a base station corresponding to the shortest calculated distance value) by transmitting the message for handover having the information of the neighbor base station to the serving base station 30. Accordingly, the mobile terminal 10 releases the radio link with the previous serving base station and wirelessly links with the selected neighbor base station (e.g., base station having the shortest calculated distance value).

As so far described, the method and apparatus for triggering handover of the mobile terminal in accordance with the present invention have many advantages.

For example, when the handover event of the mobile terminal occurs, the serving base station does not transmit all the information of the plurality of neighbor base stations to the mobile terminal, but the mobile terminal receives signals from the plurality of neighbor base stations and registers only the information of the most adjacent base station (s) to thereby shorten the time required for searching and scanning the information of the neighbor base stations. For example, by reducing the number of neighbor base stations to be scanned based on the power values of the neighbor base stations, the time taken for scanning the neighbor base stations can be shortened.

In addition, since the time taken for scanning the information of the neighbor base stations is reduced, handover can be quickly performed.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

**Claims**

1. A method for triggering handover of a mobile terminal, the method comprising:

   determining a power value of each of a plurality of neighbor base stations when a handover event of a mobile terminal occurs;
   **characterized by**
   calculating (S12) a distance value between the mobile terminal (10) and each of the plurality of neighbor base stations (20) based on the determined power values; and
   comparing (S13) the calculated distance values with a reference distance value; and
   wherein if no one of the calculated distance values is below the predetermined reference distance value registering (S15) information of a base station having the shortest distance value and transmit this information of the base station having the shortest calculated distance value to a serving base station (20) in a message for handover,
   wherein if one of the calculated distance values is below the the predetermined reference distance value, registering (S14) information of base stations having a distance value smaller than the predetermined reference distance value by transmitting this information with the base stations having calculated distance values below the predetermined reference distance value to a serving base station (20) in a message for handover.

2. The method of claim 1, wherein the handover event is a soft handover event

3. The method of claim 1 or 2, wherein the message includes information of at least two neighbor base stations.

4. The method of claim 3, wherein one of these two base stations is the neighbor base station having the shortest distance value, among the calculated distance values less than the reference distance value.

5. The method of claim 1, wherein in the calculating step (S12), the distance value (r) between the mobile terminal (10) and each of the neighbor base stations (20) is calculated by an equation shown below:

$$r = \frac{\lambda}{4\pi} \sqrt{\frac{P_T \times G_T \times G_R}{P_R}}$$

   wherein PT is transmission power of a corresponding neighbor base station, GT is a transmitting antenna gain of the corresponding neighbor base station, GR is a receiving antenna gain of the mobile terminal.

6. A mobile terminal (10), comprising:

   a physical layer (13) adapted to receive signals from neighbor base stations (20) when a handover event of the mobile terminal occurs and to measure a power value of each received signal;
   a radio link control layer (12), hereinafter called RLC layer, adapted to transmit a message for handover to a serving base station (30); and
   **characterized by**
   a control layer (11) adapted to calculate a distance value between the mobile terminal (10) and each of the neighbor base stations (20) based on the power values measured by the physical layer (13),

wherein if no one of the calculated distance values is below a predetermined reference distance value the control layer (11) is adapted to register information of a base station having the shortest distance value and wherien the RLC layer (12) is adapted to transmit this information of the base station having the shortest calculated distance value to a serving base station (20) in the message for handover,

wherein if one of the calculated distance values is below the the predetermined reference distance value, the control layer (11) is adapted to register information of base stations having a distance value smaller than the predetermined reference distance value, wherien the RLC layer (12) is adapted to transmit this information with the base stations having calculated distance values below the predetermined reference distance value to a serving base station (20) in the message for handover.

7. Mobile terminal of claim 6, wherein the message includes information of at least two neighbor base stations, wherein one of these base stations is the neighbor base station having the shortest distance value, among the calculated distance values less than the reference distance value.

8. The mobile terminal of claim 6, wherein the control layer (11) is adapted to calculate the distance value (r) between the mobile terminal (10) and each of the neighbor base stations (20) by an equation shown below:

$$r = \frac{\lambda}{4\pi} \sqrt{\frac{P_T \times G_T \times G_R}{P_R}}$$

wherein PT is transmission power of a corresponding neighbor base station. GT is a transmitting antenna gain of the corresponding neighbor base station, and GR is a receiving antenna gain of the mobile terminal.

**Patentansprüche**

1. Verfahren zum Auslösen des Weiterreichens eines Mobilendgeräts, wobei das Verfahren umfasst:

Bestimmen eines Leistungswertes jeder von mehreren Nachbar-Basisstationen, wenn ein Weiterreichungsereignis eines Mobilendgeräts auftritt;
**gekennzeichnet durch**
Berechnen (S12) eines Abstandswertes zwischen dem Mobilendgerät (10) und jeder der mehreren Nachbar-Basisstationen (20) anhand der bestimmten Leistungswerte; und
Vergleichen (S13) der berechneten Abstandswerte mit einem Referenz-Abstandswert;
wobei dann, wenn keiner der berechneten Abstandswerte kleiner als der vorgegebene Referenz-Abstandswert ist,
Registrieren (S 15) von Informationen einer Basisstation, die den kürzesten Abstandswert hat, und Senden dieser Informationen der Basisstation, die den kürzesten berechneten Abstandswert hat, zu einer bedienenden Basisstation (20) in einer Nachricht zur Weiterreichung und
wobei dann, wenn einer der berechneten Abstandswerte kleiner als der vorgegebene Referenz-Abstandswert ist,
Registrieren (S 14) von Informationen von Basisstationen, die einen Abstandswert haben, der kleiner als der vorgegebene Referenz-Abstandswert ist, **durch** Senden dieser Informationen mit den Basisstationen, deren berechnete Abstandswerte unter dem vorgegebenen Referenz-Abstandswert liegen, zu einer bedienenden Basisstation (20) in einer Nachricht zur Weiterreichung.

2. Verfahren nach Anspruch 1, wobei das Weiterreichungsereignis ein Soft-Weiterreichungsereignis ist.

3. Verfahren nach Anspruch 1 oder 2, wobei die Nachricht Informationen von wenigstens zwei Nachbar-Basisstationen enthält.

4. Verfahren nach Anspruch 3, wobei eine dieser zwei Basisstationen die Nachbar-Basisstation mit dem kürzesten Abstandswert unter den berechneten Abstandswerten, die kleiner als der Referenz-Abstandswert sind, ist.

5. Verfahren nach Anspruch 1, wobei in dem Berechnungsschritt (S 12) der Abstandswert (r) zwischen dem Mobilendgerät (10) und jeder der Nachbar-Basisstationen (20) durch eine im Folgenden angegebene Gleichung berechnet wird:

$$r = \frac{\lambda}{4\pi} \sqrt{\frac{P_T \times G_T \times G_R}{P_R}}$$

wobei $P_T$ eine Sendeleistung einer entsprechenden Nachbar-Basisstation ist, $G_T$ ein Sendeantennen-Verstärkungsfaktor der entsprechenden Nachbar-Basisstation ist und $G_R$ ein Empfangsantennen-Verstärkungsfaktor des Mobilendgeräts ist.

6. Mobilendgerät (10), das umfasst:

eine physikalische Schicht (13), die dazu ausgelegt ist, Signale von Nachbar-Basisstationen (20) zu empfangen, wenn ein Weiterreichungsereignis des Mobilendgeräts auftritt, und einen Leistungswert jedes empfangenen Signals zu messen;
eine Funkverbindungs-Steuerschicht (12), die im Folgenden RLC-Schicht genannt wird und dazu ausgelegt ist, eine Nachricht zur Weiterreichung zu einer bedienenden Basisstation (30) zu senden; und
**gekennzeichnet durch**
eine Steuerschicht (11), die dazu ausgelegt ist, einen Abstandswert zwischen dem Mobilendgerät (10) und jeder der Nachbar-Basisstationen (20) anhand der **durch** die physikalische Schicht (13) gemessenen Leistungswerte zu berechnen,
wobei dann, wenn keiner der berechneten Abstandswerte unter einem vorgegebenen Referenz-Abstandswert liegt,
die Steuerschicht (11) dazu ausgelegt ist, Informationen einer Basisstation, die den kürzesten Abstandswert hat, zu registrieren, wobei die RLC-Schicht (12) dazu ausgelegt ist, diese Informationen der Basisstation mit dem kürzesten berechneten Abstandswert zu einer bedienenden Basisstation (20) in der Nachricht zur Weiterreichung zu senden, und
wobei dann, wenn einer der berechneten Abstandswerte kleiner als der vorgegebene Referenz-Abstandswert ist, die Steuerschicht (11) dazu ausgelegt ist, Informationen von Basisstationen mit einem Abstandswert, der kleiner als der vorgegebene Referenz-Abstandswert ist, zu registrieren, wobei die RLC-Schicht (12) dazu ausgelegt ist, diese Informationen mit den Basisstationen, deren berechnete Abstandswerte unter dem vorgegebenen Referenz-Abstandswert liegen, zu einer bedienenden Basisstation (20) in der Nachricht zur Weiterreichung zu senden.

7. Mobilendgerät nach Anspruch 6, wobei die Nachricht Informationen von wenigstens zwei Nachbar-Basisstationen enthält, wobei eine dieser Basisstationen die Nachbar-Basisstation mit dem kürzesten Abstandswert unter den berechneten Abstandswerten, die kleiner als der Referenz-Abstandswert sind, ist.

8. Mobilendgerät nach Anspruch 6, wobei die Steuerschicht (11) dazu ausgelegt ist, den Abstandswert ($r$) zwischen dem Mobilendgerät (10) und jeder der Nachbar-Basisstation (20) durch eine im Folgenden angegebene Gleichung zu berechnen:

$$r = \frac{\lambda}{4\pi} \sqrt{\frac{P_T \times G_T \times G_R}{P_R}}$$

wobei $P_T$ eine Sendeleistung einer entsprechenden Nachbar-Basisstation ist, $G_T$ ein Sendeantennen-Verstärkungsfaktor der entsprechenden Nachbar-Basisstation ist und $G_R$ ein Empfangsantennen-Verstärkungsfaktor des Mobilendgeräts ist.

**Revendications**

1. Procédé pour déclencher un transfert de cellule d'un terminal mobile, le procédé comprenant :

la détermination d'une valeur de puissance de chacune parmi une pluralité de stations de base avoisinantes lorsque il se produit un événement de transfert de cellule d'un terminal mobile;

**caractérisé par**

le calcul (S 12) d'une valeur de distance entre le terminal mobile (10) et chacune parmi la pluralité de stations de base avoisinantes (20) sur la base des valeurs de puissance déterminées ; et

la comparaison (S13) des valeurs de distance calculées avec une valeur de distance de consigne ; et

dans lequel, dans le cas où aucune des valeurs de distance calculées n'est inférieure à la valeur de distance de consigne prédéterminée

l'enregistrement (S15) des informations concernant une station de base qui présente la valeur de distance la plus faible et l'émission de ces informations concernant la station de base présentant la valeur de distance calculée la plus faible à une station de base de service (20) dans un message pour le transfert de cellules,

dans lequel, dans le cas où l'une des valeurs de distance calculées est inférieure à la valeur de distance de consigne prédéterminée,

l'enregistrement (S 14) des informations concernant les stations de base présentant une valeur de distance inférieure à la valeur de distance de consigne prédéterminée par l'émission de ces informations concernant les stations de base qui présentent des valeurs de distance calculées inférieures à la valeur de distance de consigne prédéterminée vers une station de base de service (20) dans un message pour le transfert de cellule.

2. Le procédé selon la revendication 1, dans lequel l'événement de transfert de cellules est un événement de transition en douceur d'une cellule à l'autre.

3. Le procédé selon la revendication 1 ou 2, dans lequel le message comprend des informations concernant au moins deux stations de base avoisinantes.

4. Le procédé selon la revendication 3, dans lequel l'une parmi les deux stations de base est la station de base avoisinante présentant la valeur de distance la plus faible parmi les valeurs de distance calculées inférieures à la valeur de distance de consigne.

5. Le procédé selon la revendication 1, dans lequel, lors de l'étape de calcul (S 12), la valeur de distance (r) entre le terminal mobile (10) et chacune des stations de base avoisinantes (20) est calculée par l'équation indiquée ci-dessous

$$r = \frac{\lambda}{4\pi} \cdot \sqrt{\frac{P_T \cdot G_T \cdot G_R}{P_R}}$$

dans laquelle PT est une puissance d'émission d'une station de base avoisinante correspondante, GT est un gain d'antenne d'émission de la station de base avoisinante correspondante, et GR est un gain d'antenne de réception du terminal mobile.

6. Un terminal mobile (10), comprenant :

une couche physique (13) adaptée pour recevoir des signaux provenant de stations de base avoisinantes (20) lorsqu'il se produit un événement de transfert de cellule du terminal mobile et pour mesurer une valeur de puissance de chaque signal reçu;

une couche de contrôle de liaison radio (Radio Link Layer en anglais) (12), appelée par la suite couche RLC, adaptée pour transmettre un message pour un transfert de cellule à une station de base de service (30) ; et

**caractérisé par**

une couche de contrôle (11) adaptée pour calculer une valeur de distance entre le terminal mobile (10) et chacune des stations de base avoisinantes (20) sur la base des valeurs de puissance mesurées par la couche physique (13),

dans lequel, dans le cas où aucune des valeurs de distance calculées n'est inférieure à une valeur de distance de consigne prédéterminée

la couche de contrôle (11) est adaptée pour enregistrer des informations concernant une station de base présentant la valeur de distance la plus faible et dans lequel la couche RLC (12) est adaptée pour émettre ces informations concernant la station de base présentant la valeur de distance calculée la plus faible à une station de base de service (20) au sein du message pour le transfert de cellule,

dans lequel, dans le cas où l'une des valeurs de distance calculées est inférieure à la valeur de distance de consigne prédéterminée, la couche de contrôle (11) est adaptée pour enregistrer les informations concernant des stations de base présentant une valeur de distance qui est plus faible que la valeur de distance de consigne prédéterminée, dans lequel la couche RLC (12) est adaptée pour émettre ces informations concernant les stations de base qui présentent des valeurs de distance calculées inférieures à la valeur de distance de consigne prédéterminée vers une station de base de service (20) au sein du message pour le transfert de cellule.

7. Le terminal mobile selon la revendication 6, dans lequel le message comprend des informations concernant au moins deux stations de base avoisinantes,
dans lequel l'une de ces stations de base est la station de base avoisinante présentant la valeur de distance la plus faible, parmi les valeurs de distance calculées inférieures à la valeur de distance de consigne.

8. Le terminal mobile selon la revendication 6, dans lequel la couche de contrôle (11) est adaptée pour calculer la valeur de distance (r) entre le terminal mobile (10) et chacune des stations de base avoisinantes (20) au moyen de l'équation ci-dessous :

$$r = \frac{\lambda}{4\pi} \cdot \sqrt{\frac{P_T \cdot G_T \cdot G_R}{P_R}}$$

dans laquelle PT est la puissance d'émission d'une station de base avoisinante correspondante, GT est un gain d'antenne d'émission de la station de base avoisinante correspondante, et GR est un gain d'antenne de réception du terminal mobile.

# FIG. 1

MOBILE TERMINAL

SERVING BASE STATION

HANDOVER EVENT
OCCURRED

TRANSMITTING NBR-ADV MESSAGE

TRANSMITTING SCN-REQ MESSAGE

# FIG. 2

RECEIVING
SYSTEM
$P_R$

GAIN: $G_R$

10

TRANSMITTING
SYSTEM
$P_T$

GAIN: $G_T$

20

r

EP 1 753 259 B1

FIG. 3

10

MOBILE TERMINAL

11 — CONTROL LAYER

12 — RLC LAYER

13 — PHYSICAL LAYER

30

SERVING BASE
STATION

20 — A PLURALITY OF NEIGHBOR
BASE STATIONS

11

# FIG. 4

```
                          ┌──────────┐
                          │  START   │
                          └────┬─────┘
                               │
        ┌──────────────────────────────────┐
        │      RECEIVING SIGNALS OF         │───S11
        │     NEIGHBOR BASE STATIONS        │
        └──────────────────┬───────────────┘
                           │
        ┌──────────────────────────────────┐
        │    CALCULATING DISTANCE VALUE     │───S12
        │   BASED ON POWER VALUES OF SIGNALS│
        └──────────────────┬───────────────┘
                           │
                         S13
                    ◇───────────◇
                 CALCULATED
         DISTANCE VALUES < REFERENCE ──── NO ──────┐
                 DISTANCE VALUE?                    │
                    ◇───────────◇                   │
                           │ YES                    │
        ┌────────────────────────────┐   ┌────────────────────────────┐
        │ REGISTERING INFORMATION OF │   │ REGISTERING INFORMATION OF │
        │ BASE STATIONS CORRESPONDING│S14│ BASE STATION CORRESPONDING │ S15
        │ TO A VALUE SMALLER THAN    │   │ TO THE SHORTEST DISTANCE   │
        │ REFERENCE DISTANCE VALUE   │   │ VALUE                      │
        └─────────────┬──────────────┘   └────────────────────────────┘
                      │
                 ┌────────┐
                 │  END   │
                 └────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6615044 B
- US 6845238 B
- US 6879831 B
- US 6137783 A

**Non-patent literature cited in the description**

- **E.A. FRECH et al.** *Cellular Models and Hand-off Criteria,* 1989, 128-135